# EUROPEAN PATENT SPECIFICATION

(11) **EP 3 163 140 B1**
(45) Date of publication and mention of the grant of the patent: **27.01.2021**
(21) Application number: 15811885.1
(22) Date of filing: 16.06.2015
(51) Int. Cl.: F16L 15/04, E21B 17/042, C10M 169/00

(54) **THREADED JOINT FOR OIL WELL PIPE AND COMPOSITION FOR LIGHT-CURABLE FILM COVERING**
GEWINDEVERBINDUNGSSTÜCK FÜR EIN ÖLBOHRUNGSROHR UND ZUSAMMENSETZUNG FÜR LICHTHÄRTBARE FILMABDECKUNG
RACCORD FILETÉ POUR TUYAU DE PUITS DE PÉTROLE ET COMPOSITION POUR REVÊTEMENT PELLICULAIRE POUVANT DURCIR À LA LUMIÈRE

(30) Priority: 23.06.2014 JP 2014128605
(43) Date of publication of application: 03.05.2017
(73) Proprietor: Nippon Steel Corporation, Tokyo 100-8071 (JP); Vallourec Oil and Gas France, 59620 Aulnoye-Aymeries (FR)
(72) Inventor: GOTO, Kunio, Tokyo 100-8071 (JP); PETIT, Mikael, 69400 Villefranche sur Saone (FR)
(74) Representative: J A Kemp LLP
(86) International application number: PCT/JP2015/002994
(87) International publication number: WO 2015/198557

(56) References cited:
- WO-A1-2007/102370
- WO-A1-2009/072486
- WO-A1-2010/147142
- WO-A1-2012/060474
- WO-A1-2013/183634
- WO-A2-2008/090411
- JP-A- 2008 069 883
- JP-A- 2011 515 258
- JP-A- 2012 518 713
- JP-A- 2013 545 041

## Description

### TECHNICAL FIELD

The present invention relates to a threaded connection for oil country tubular goods comprising photocurable (ultraviolet curable) coating.

### BACKGROUND ART

Oil country tubular goods (abbreviated as "OCTG") are used in the drilling of oil wells and gas wells (hereunder referred to as "oil wells"). Examples of oil country tubular goods include tubing pipes and casing pipes. A fluid such as crude oil or a gas flows inside the tubing pipe. Oil country tubular goods are normally connected to each other using a threaded connection for oil country tubular goods. In the past, the depth of oil wells was between 2,000 and 3,000 meters. However, in offshore oil wells and the like of recent years, the depth of an oil well reaches 8,000 to 10,000 meters. The length of a single pipe that is used as oil country tubular goods is typically ten-odd meters. Accordingly, the number of oil country tubular goods products that are utilized in oil well drilling reaches 1,000 or more.

A threaded connection for oil country tubular goods generally includes a pin and a box. In a typical threaded connection for oil country tubular goods, the pin is formed on an outer surface at an end portion of the oil country tubular goods and has an external thread. The box is formed on an inner surface at both ends of a coupling that is a threaded connection member for oil country tubular goods and has an internal thread.

An unthreaded metal contact portion is formed at a front end part of the external thread of the pin and at a bottom portion on an internal thread of the box, respectively. One end (the pin) of the oil country tubular goods product is inserted into the coupling (the box), and the external thread and the internal thread are fastened together. Hereinafter, fastening of the threaded connection is referred to as making up. Loosening of the threaded connection is referred to as breaking out. By this means, the unthreaded metal contact portions of the pin and the box come in contact with each other, and a metal-to-metal seal is formed. The seal ensures the gastightness of the threaded connection.

In the aforementioned usage environment, threaded connections for oil country tubular goods are required to withstand an axial tensile force caused by the weight of the oil country tubular goods that are connected, as well as pressures of internal and external fluids. A threaded connection for oil country tubular goods is also required to have galling resistance. More specifically, a threaded connection for oil country tubular goods is required to have favorable galling resistance even if repeatedly used four times or more with respect to casing pipes (large diameter size) and 10 times or more with respect to tubing pipes (small diameter size).

Conventionally, to improve galling resistance, a copper plated film is formed on a contact surface of the pin or the box of a threaded connection for the oil country tubular goods, and a surface treatment such as phosphate treatment is performed thereon. In this case, the contact surface is a surface portion at which the pin and the box contact each other, and includes a thread portion and an unthreaded metal contact portion.

In order to further improve galling resistance, a liquid lubricant referred to as "compound grease" is applied to the contact surface of the pin or the box before connecting. Such compound grease is prescribed, for example, in API BUL 5A2.

Because compound grease contains a large amount of heavy metal powders that are typified by zinc, lead and copper, there are concerns about the influence of compound grease on the environment and on humans. Consequently, the use of compound grease is being restricted in recent years. Accordingly, there is a demand for a threaded connection for oil country tubular goods that exhibits excellent galling resistance without using compound grease.

Threaded connections for oil country tubular goods that do not use compound grease have been proposed by the present applicants in International Application Publication No. WO2006/104251 (Patent Literature 1), International Application Publication No. WO2007/42231 (Patent Literature 2), International Application Publication No. WO2009/72486 (Patent Literature 3) and International Application Publication No. WO2013/053450 (Patent Literature 4).

In a threaded connection disclosed in Patent Literature 1, a contact surface of at least one of a pin and a box is formed with a two-layer coating. The two-layer coating consists of a viscous liquid or semisolid lubricating coating and a dry solid coating that is formed on the lubricating coating. The dry solid coating is formed from a thermosetting resin coating such as an acrylic resin or an ultraviolet curing resin coating. The lubricating coating has tackiness and foreign matter easily adheres thereto. However, the tackiness at the top of the contact surface is suppressed by the dry solid coating on the lubricating coating. The dry solid coating is broken at the time of connecting the threaded connection. Therefore, the lubricity of the lubricating coating is ensured.

In a threaded connection disclosed in Patent Literature 2, a lubricating coating is formed on a thread portion of a pin and a box. The lubricating coating contains a solid matrix that exhibits plastic or viscoplastic rheological behavior (flow properties), and solid lubricant particles that are dispersed in the solid matrix. A preferable fusing point of the solid matrix is in the range of around 80 to 320°C. The lubricating coating is formed by spray coating (hot melt spraying), by spraying using powder, or by spray coating of an aqueous emulsion. A composition used in the hot melt spraying contains, for example, a thermoplastic polymer (such as polyethylene), wax (such as carnauba wax) as a lubricant component, a metal soap (such as zinc stearate) and a corrosion inhibitor (such as calcium sulfonate).

In a threaded connection disclosed in Patent Literature 3 a solid anticorrosive coating is formed on a contact surface of a pin, and a solid lubricating coating is formed on a contact surface of a box. The solid anticorrosive coating contains an ultraviolet curing resin as a main ingredient, and preferably is transparent. The solid lubricating coating is formed by hot melt spraying using a composition containing a thermoplastic polymer, wax, a metal soap, a corrosion inhibitor, a water-insoluble liquid resin and a solid lubricant.

In a threaded connection disclosed in Patent Literature 4, an end portion of the threaded connection that includes at least one threaded region is at least partially coated with a dry film. The dry film contains a thermoplastic or thermosetting matrix that contains microcapsules filled with a compound in liquid form. The microcapsules are synthesized using an interfacial aqueous solution chemical polymerization method. According to Patent Literature 4, preferably a melamine-formalin monomer is used as a thin-film material of the microcapsule.

The threaded connections disclosed in Patent Literatures 1 to 3 exhibit excellent lubricity and galling resistance in cold and warm environments in the range of around -10°C to +50°C. However, when these threaded connections are exposed to an extremely low temperature environment of less than -10°C (for example, in the range of around -60°C to -20°C), the lubricating coating formed on the contact surfaces peels off and becomes brittle. In such case, the torque required for making up or breaking out increases noticeably and the lubricity decreases. Consequently, the galling resistance also decreases. Similarly, in the case of the threaded connection disclosed in Patent Literature 4 also, there are cases when the lubricity and galling resistance are low in an extremely low temperature environment.

Furthermore, it is preferable to suppress the occurrence of rust on a contact surface of a threaded connection.

WO 2012/060474 discloses a threaded connection in accordance with the precharacterizing clause of claim 1.

WO 2008/090411 discloses coating systems which provide corrosion resistance and, optionally, lubrication, for threaded connections are disclosed. The compositions comprise a first coating composition comprising polymer matrices of polyimides or epoxies which are modified with small amounts of a fluorine containing polymer. Also present in the coating compositions are corrosion inhibiting agents and inorganic particles having a mean diameter of between approximately 10 nm and 10 µm. Solid lubricants, which may include at least one of PTFE, HDPE, Graphite, and MoS₂, are optionally added to provide the first coating with a low coefficient of friction.

### SUMMARY OF INVENTION

An object of the present invention is to provide a threaded connection for oil country tubular goods that exhibits excellent lubricity, rust preventing properties and galling resistance without using compound grease, even in an extremely low temperature environment.

A threaded connection for oil country tubular goods according to the present embodiment comprises a pin and box that each include a contact surface having a thread portion and an unthreaded metal contact portion wherein the contact surface of the pin comprises, as an uppermost layer, a photocured coating containing a photocurable resin , and the contact surface of the box comprises a solid lubricating coating as an uppermost layer, characterized in that the photocured coating further contains perfluoropolyether of 3,000 or more of a weight-average molecular weight.

The threaded connection for oil country tubular goods according to the present embodiment exhibits excellent lubricity, rust preventing properties and galling resistance without using compound grease, even in an extremely low temperature environment.

### BRIEF DESCRIPTION OF DRAWINGS

[FIG. 1] FIG. 1 is a cross-sectional view of a threaded connection for oil country tubular goods.
[FIG. 2] FIG. 2 is a multiple view drawing including an enlarged view of the vicinity of a contact surface of a pin and an enlarged view of the vicinity of a contact surface of a box in FIG. 1.

### DESCRIPTION OF EMBODIMENT

An embodiment of the present invention is described in detail hereunder. The present inventors conducted investigations and studies regarding galling resistance, lubricity and rust preventing properties in an extremely low temperature environment. As a result, the present inventors obtained the following findings.

When a photocured (ultraviolet cured) coating containing a photocurable (ultraviolet curable) resin and perfluoropolyether is formed on a contact surface, an increase in fastening torque in an extremely low temperature environment can be suppressed. Consequently, the lubricity increases and galling is not liable to occur even if making up and breaking out are repeated in an extremely low temperature environment. In addition, the photocured (ultraviolet cured) coating containing perfluoropolyether exhibits excellent rust preventing properties.

A threaded connection for oil country tubular goods of the present embodiment that was completed based on the above findings includes a pin and a box. The pin and the box each include a contact surface having a thread portion and an unthreaded metal contact portion. The contact surface of the pin includes a photocured (ultraviolet cured) coating as an uppermost layer. The photocured (ultraviolet cured) coating contains a photocurable (ultraviolet curable) resin and perfluoropolyether. The contact surface of the box includes a solid lubricating coating as an uppermost layer.

In the threaded connection for oil country tubular goods of the present embodiment, the photocured (ultraviolet cured) coating of the contact surface of the pin contains perfluoropolyether. Consequently the photocured (ultraviolet cured) coating has a high degree of lubricity even in an extremely low temperature environment. Accordingly, even if making up and breaking out with respect to the threaded connection for oil country tubular goods are repeated, galling is not liable to occur. In addition, the photocured (ultraviolet cured) coating exhibits excellent rust preventing properties. Consequently, the contact surface of the pin is not liable to rust.

Preferably, the photocured (ultraviolet cured) coating contains 0.2 to 20% by mass of perfluoropolyether.

In this case, the lubricity, galling resistance and rust preventing properties of the photocured (ultraviolet cured) coating are further enhanced.

According to the invention, the weight-average molecular weight of the perfluoropolyether is 3,000 or more, whereby the lubricity of the photocured (ultraviolet cured) coating is enhanced.

Preferably, the thickness of the aforementioned solid lubricating coating is 10 to 150 µm, and the thickness of the aforementioned photocured (ultraviolet cured) coating is 5 to 40 µm.

At least one of the contact surface of the pin and the contact surface of the box of the aforementioned threaded connection for oil country tubular goods may be subjected to pre surface treatment by one or more types of methods selected from the group consisting of blasting treatment, pickling treatment, chemical conversion treatment and metal plating.

In this case, roughness of the contact surface is increased by the pre surface treatment. Consequently, the adhesiveness with respect to the contact surface of the photocured (ultraviolet cured) coating and/or the solid lubricating coating increases.

A composition for a photocurable (ultraviolet curable) coating according to an example is formed on a contact surface of the threaded connection for oil country tubular goods. The composition for a photocurable (ultraviolet curable) coating contains a photocurable (ultraviolet curable) resin composition and perfluoropolyether.

The composition for a photocurable (ultraviolet curable) coating contains perfluoropolyether. Consequently, a photocured (ultraviolet cured) coating that is formed by photocuring (ultraviolet curing) the aforementioned composition exhibits a high degree of lubricity. Therefore, galling is not liable to occur even if making up and breaking out with respect to the threaded connection for oil country tubular goods are repeated. In addition, the photocured (ultraviolet cured) coating exhibits excellent rust preventing properties.

Hereunder, the threaded connection for oil country tubular goods according to the present embodiment is described in detail.

### [Structure of threaded connection for oil country tubular goods]

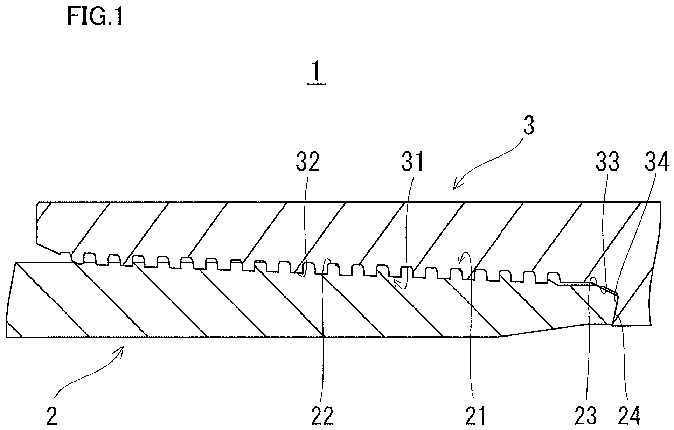

FIG. 1 is a cross-sectional view of a threaded connection for oil country tubular goods. As illustrated in FIG. 1, a threaded connection for oil country tubular goods 1 includes a pin 2 and a box 3. The pin 2 includes a contact surface 21. The contact surface 21 includes a thread portion 22 that is an external thread, and an unthreaded metal contact portion 23. The unthreaded metal contact portion 23 is located further on a front end side of the pin 2 relative to the thread portion 22. The contact surface 21 further includes a shoulder part 24 at the front end thereof.

The box 3 includes a contact surface 31. The contact surface 31 includes a thread portion 32 that is an internal thread, and an unthreaded metal contact portion 33. The unthreaded metal contact portion 33 is located further on a bottom portion (base) side of the box 3 relative to the thread portion 32. The contact surface 31 further includes a shoulder part 34 on the bottom portion (base) thereof.

When making up the threaded connection 1, the pin 2 is inserted into the box 3 and fastened therein. At this time, the contact surface 21 of the pin 2 and the contact surface 31 of the box 3 contact each other. More specifically, the thread portions 22 and 32 contact each other, and the unthreaded metal contact portions 23 and 33 contact each other. Making up is completed when the shoulder part 24 of the pin 2 contacts the shoulder part 34 of the box 3, and thus the gastightness of the threaded connection 1 is maintained.

The threaded connection 1 is, for example, a T&C (threaded and coupled) type threaded connection that includes a coupling. In this case, the threaded connection 1 includes a pin that is formed at an end part of the oil country tubular goods product, and a box that is formed in a coupling. The threaded connection 1 may also be an integral type threaded connection. In this case, a pin is formed at one end of the oil country tubular goods product, and a box is formed at the other end of the oil country tubular goods product.

As described above, the contact surfaces 21 and 31 come in contact with each other as the result of making up. Therefore, the contact surfaces 21 and 31 are required to exhibit excellent galling resistance and lubricity. Further, the gastightness will decrease if rust occurs on the contact surface 21. Consequently, the pin 2 is normally covered with a cap that is referred to as a "protector" before use. However, in some cases rust may arise on the contact surface 21 of the pin 2 even if the pin 2 is covered with a protector. Therefore, the contact surface 21 is also required to exhibit excellent rust preventing properties.

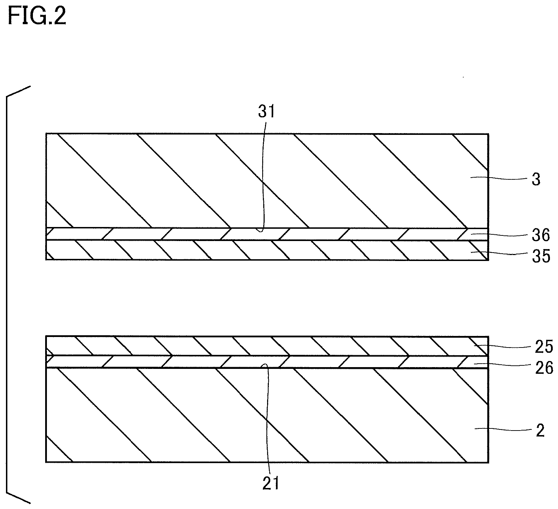

FIG. 2 is a multiple view drawing including an enlarged view of the vicinity of the contact surface 21 of the pin 2 and an enlarged view of the vicinity of the contact surface 31 of the box 3 in FIG. 1. As illustrated in FIG. 2, a photocured (ultraviolet cured) coating 25 is formed in an uppermost layer on the contact surface 21. On the other hand, a solid lubricating coating 35 is formed in an uppermost layer on the contact surface 31.

When making up the threaded connection 1, the photocured (ultraviolet curaed) coating 25 on the contact surface 21 and the solid lubricating coating 35 on the contact surface 31 contact each other. Since the photocured (ultraviolet cured) coating 25 exhibits excellent lubricity, an increase in the fastening torque is suppressed even in an extremely low temperature environment. Consequently, the galling resistance of the threaded connection 1 is enhanced. The photocured (ultraviolet cured) coating 25 also exhibits excellent rust preventing properties. Consequently, the occurrence of rust on the contact surface before making up is suppressed.

As shown in FIG. 2, an undercoating 26 or 36 may also be formed on the contact surface 21 and 31, respectively. The undercoatings 26 and 36 are formed by a pre surface treatment. The undercoatings 26 and 36 enhance the adhesiveness of the photocured (ultraviolet cured) coating 25 and the solid lubricating coating 35. Either one of the undercoatings 26 and 36 need not be formed, or both of the undercoatings 26 and 36 need not be formed. That is, the photocured (ultraviolet cured) coating 25 may be formed directly on the contact surface 21, and the solid lubricating coating 35 may be formed directly on the contact surface 31.

### [Photocurable (ultraviolet curable) coating]

The photocured (ultraviolet cured) coating 25 will be described in detail hereunder. The photocured (ultraviolet cured) coating 25 contains a photocurable (ultraviolet curable) resin and perfluoropolyether.

### [Photocurable (ultraviolet curable) resin]

A photocured (ultraviolet cured) resin is formed by curing a photocurable (ultraviolet curable) resin composition. The photocurable (ultraviolet curable) resin composition is not particularly limited as long as a photopolymerization reaction is caused by irradiation with light rays to form a cured coating. The photopolymerization reaction may be a radical polymerization reaction or may be a cationic polymerization reaction. The light rays are, for example, ultraviolet rays. The photocurable (ultraviolet curable) resin composition contains a monomer and/or an oligomer, and a photopolymerization initiator.

Examples of the monomer include polyvalent (di, tri, or higher) esters of polyhydric alcohols with (meth)acrylic acid, various (meth)acrylate compounds, N-vinylpyrrolidone, N-vinylcaprolactam, and styrenes.

Examples of the oligomer include epoxy (meth)acrylates, urethane (meth)acrylates, polyester (meth)acrylates, polyether (meth)acrylates, and silicone (meth)acrylates.

The photopolymerization initiator is not particularly limited. Preferable photopolymerization initiators are compounds having absorption in a wavelength region of 260 to 450 nm such as, for example, benzoin and its derivatives, benzophenone and its derivatives, acetophenone and its derivatives, Michler's ketone, benzil and its derivatives, tetraalkylthiuram monosulfides, and thioxanes. Thioxanes are more preferable as the photopolymerization initiator.

### [Perfluoropolyether]

Perfluoropolyether (PFPE) is a fluorinated synthetic oil, which is a polymeric material containing carbon (C), oxygen (O) and fluorine (F). More specifically, PFPE contains one or a plurality of CF₂ groups and O. PFPE is thermally and chemically stable and inert, and has a high viscosity index and a low solidification point. Even when PFPE is used for an extended period at 150°C, a chemical change such as oxidation, polymerization or molecular rupture is not liable to occur. In addition, the vapor pressure of PFPE is low.

The photocured (ultraviolet cured) coating 25 according to the present embodiment contains PFPE. Consequently, the lubricity of the photocured (ultraviolet cured) coating 25 is maintained even under an extremely low temperature environment. Accordingly, fastening torque can be reduced in the case of making up the threaded connection 1 on which the photocured (ultraviolet cured) coating 25 is formed. In particular, shouldering torque that is torque at a time that the shoulder part 24 at the front end of the pin 2 and the shoulder part 34 of the box 3 come in contact and start to interfere with each other can be reduced. Consequently, the galling resistance of the threaded connection 1 is enhanced. The rust preventing properties of the aforementioned photocured (ultraviolet cured) coating 25 are also enhanced by containing PFPE.

Preferably, the photocured (ultraviolet cured) coating 25 contains 0.2 to 20% by mass of PFPE. If the PFPE content in the photocured (ultraviolet cured) coating 25 is 0.2% or more, the lubricity is further enhanced. If the PFPE content is 20% or less, the strength of the photocured (ultraviolet cured) coating 25 and the adhesiveness thereof with respect to the contact surface 21 can be maintained at a high level. A further preferable lower limit of the PFPE content is 0.5%.

A weight-average molecular weight of the PFPE is 3,000 or more. If the weight-average molecular weight is 3,000 or more, dispersion of the PFPE in the photocurable (ultraviolet curable) resin is facilitated. Consequently, the lubricity of the photocurable (ultraviolet curable) resin is further enhanced, and the torque at the time of making up decreases. A preferable weight-average molecular weight of the PFPE is 5,000 or more, and more preferably is 7,000 or more. Although an upper limit of the weight-average molecular weight of the PFPE is not particularly limited, for example, the upper limit is 12,000.

The PFPE, for example, contains repeating units of one or more types selected from (CF₂O), (CF₂CF₂O), (CF₂CF(CF₃)O) and (CF₂CF₂CF₂O). A commercially available product may be used as the PFPE. For example, the PFPE is a product manufactured by E.I. du Pont de Nemours and Company, Inc. under the product name "KRYTOX" that is disclosed in Japanese Patent Application Publication No. 2011-256397, or products manufactured by the Ausimont/Montedison Group under the product names FOMBLIN and GALDEN, or is a product manufactured by Daikin Industries, Ltd. under the product name "DEMNUM".

The photocured (ultraviolet cured) coating 25 may further contain one or more types of rust-preventing agent and colorant as addition agents.

The rust-preventing agent is, for example, aluminum tripolyphosphate or aluminum phosphite or the like. An upper limit of the content of the rust-preventing agent is 0.10 parts by mass with respect to one part by mass of the photocurable (ultraviolet curable) resin composition.

The colorant is, for example, a pigment, a dye, or a fluorescent material. The photocurable (ultraviolet curable) resin is transparent. Therefore, the photocured (ultraviolet cured) coating 25 may contain a colorant to facilitate quality inspection (such as an inspection for the presence or absence of the photocured (ultraviolet cured) coating 25 or to check the uniformity of the thickness of the photocured (ultraviolet cured) coating 25) by visual examination or by image processing with respect to the photocured (ultraviolet cured) coating 25 which is formed.

A preferable pigment is a pigment having a high degree of brightness such as a yellow or white pigment. From the viewpoint of rust preventing properties, a pigment having a minute particle diameter is preferable. The average particle diameter of a preferable pigment is not more than 5 µm. Since it is easy to maintain the transparency of the photocurable (ultraviolet curable) resin, a dye having a strong color such as red or blue may be used as the dye.

A preferable maximum value of the total content of the pigment and the dye is 0.05 parts by mass with respect to one part by mass of the photocurable (ultraviolet curable) resin composition. If the total content of the pigment and the dye is more than 0.05, in some cases the rust preventing properties of the photocured (ultraviolet cured) coating 25 may decline. A preferable upper limit of the total content of the pigment and the dye is 0.02.

A fluorescent material can be any of a phosphor used in a fluorescent pigment, a fluorescent dye, and a fluorescent paint. Fluorescent pigments are broadly categorized as inorganic fluorescent pigments and daylight fluorescent pigments.

Examples of inorganic fluorescent pigments include pigments based on zinc sulfide or zinc cadmium sulfide (containing a metal activator), halogenated calcium phosphates, rare earth-activated strontium chloroapatite and the like, and two or more types of these inorganic fluorescent pigments may be mixed. Inorganic fluorescent pigments exhibit excellent heat resistance and weather resistance properties.

The daylight fluorescent pigment is, for example, a synthetic resin solid-solution type fluorescent pigment in which a fluorescent dye is incorporated into a colorless synthetic resin to form a pigment. A fluorescent dye itself may also be used. Various kinds of inorganic or organic fluorescent pigments and particularly synthetic resin solid-solution type fluorescent pigments are also used in fluorescent paints and fluorescent printing inks, and those phosphors can be used as fluorescent pigments or fluorescent dyes.

The photocured (ultraviolet cured) coating 25 containing a fluorescent material is colorless or has a transparent color under visible light. However, when the photocured (ultraviolet cured) coating 25 is irradiated with black light or ultraviolet rays, the photocured (ultraviolet cured) coating 25 fluoresces or becomes colored. Consequently, it can be ascertained whether or not the photocured (ultraviolet cured) coating 25 is present and to check for unevenness or the like in the thickness of the photocured (ultraviolet cured) coating. In addition, the fluorescent material is transparent under visible light. Consequently, the contact surface 21 can be observed, and it is possible to inspect for damage of the contact surface 21 (thread portion 22 and unthreaded metal contact portion 23) of the threaded connection.

A maximum value of the content of these fluorescent materials is 0.05 parts by mass with respect to one part by mass of the photocurable (ultraviolet curable) resin composition. If the maximum value is more than 0.05, in some cases the rust preventing properties of the photocured (ultraviolet cured) coating 25 may decline. A more preferable upper limit of the content of the fluorescent material is 0.02.

### [Method for producing photocured (ultraviolet cured) coating 25]

A method for producing the photocured (ultraviolet cured) coating 25 is as follows.

A composition for a photocurable (ultraviolet curable) coating in liquid form that is the raw material for the above described photocured (ultraviolet cured) coating 25 is prepared. The composition for a photocurable (ultraviolet curable) coating contains the above described photocurable (ultraviolet curable) resin composition, PFPE and photopolymerization initiator, and may also contain the above described addition agents.

The liquid composition for a photocurable (ultraviolet curable) coating is applied onto the contact surface 21 of the pin 2 of the threaded connection 1. The method of application is not particularly limited. The liquid composition for a photocurable (ultraviolet curable) coating may be applied by a worker, or may be applied by another method. After the composition for a photocurable (ultraviolet curable) coating has been applied, light rays (for example ultraviolet rays) are irradiated onto the applied composition for a photocurable (ultraviolet curable) coating. Irradiation of the light rays cures the composition for a photocurable (ultraviolet curable) coating to thereby form a photocured (ultraviolet cured) coating.

The above described application and light irradiation of the composition for a photocurable (ultraviolet curable) coating may be repeated to form two or more layers of the photocured (ultraviolet cured) coating. The strength of the photocured (ultraviolet cured) coating 25 is enhanced by forming multiple layers of the photocured (ultraviolet cured) coating 25. In this case, because the photocured (ultraviolet cured) coating 25 is not liable to broken by torque when making up the threaded connection 1, the lubricity, galling resistance and rust preventing properties of the contact surface 21 are maintained.

In the case of forming a multilayered coating on the contact surface 21, it is sufficient if the uppermost layer is the above described photocured (ultraviolet cured) coating 25, and the layers other than the uppermost layer may be other coatings that are different from the aforementioned photocured (ultraviolet cured) coating 25.

In the case of utilizing an ultraviolet curing-type resin composition as the photocurable (ultraviolet curable) resin composition, light irradiation may be performed using an ultraviolet ray irradiation apparatus having an output wavelength in the region of 200 to 450 nm. Examples of an irradiation source of the ultraviolet rays include a high pressure mercury vapor lamp, an ultrahigh pressure mercury vapor lamp, a xenon lamp, a carbon arc lamp, a metal halide lamps, and sunlight. The length of time for which irradiation is performed and the strength of the irradiated ultraviolet rays can be suitably set by a person skilled in the art.

If the thickness of the photocured (ultraviolet cured) coating 25 (total thickness of the plurality of photocured (ultraviolet cured) coatings in a case where two or more layers of the photocured (ultraviolet cured) coating 25 are formed) is too thin, the rust preventing properties, lubricity and galling resistance of the threaded connection 1 will be lowered. On the other hand, if the thickness is too thick, in a case where the aforementioned protector is mounted on the pin, the photocured (ultraviolet cured) coating 25 may be damaged by an external force when mounting the protector. In such case, the rust preventing properties, lubricity and galling resistance of the threaded connection 1 decrease. Accordingly, a preferable thickness of the photocured (ultraviolet cured) coating 25 is 5 to 50 µm. A further preferable lower limit of the thickness of the photocured (ultraviolet cured) coating 25 is 10 µm. A further preferable upper limit of the thickness of the photocured (ultraviolet cured) coating 25 is 40 µm.

As described above, the photocured (ultraviolet cured) coating 25 of the present embodiment is transparent. Consequently, the base metal (contact surface) can be observed without removing the photocured (ultraviolet cured) coating 25. More specifically, existence or non-existence of damage to the thread portion 22 or the like can be visually checked from above the photocured (ultraviolet cured) coating 25 prior to make up. According to the present embodiment, the photocured (ultraviolet cured) coating 25 is formed on the contact surface 21 of the pin 2 which is susceptible to damage. Therefore, while leaving the photocured (ultraviolet cured) coating 25 in place, it is possible to easily inspect for and check the existence or non-existence of damage to the pin 2.

### [Solid lubricating coating 35]

In the present embodiment, the solid lubricating coating 35 is formed on the contact surface 31 of the box 3. A preferable solid lubricating coating 35 is a solid lubricating coating 35 as disclosed in International Application Publication No. WO2007/42231 or International Application Publication No. WO2009/72486.

Specifically, the solid lubricating coating 35 of the present embodiment is a coating in which a solid lubricant is dispersed in a thermosetting resin matrix, and unlike a more general hard coating, is a coating that exhibits plastic or viscoplastic rheological behavior at room temperature, that is typified by a hot-melt coating. More specifically, while the solid lubricating coating 35 is a solid and does not flow under normal pressure, the solid lubricating coating 35 flows under a high pressure.

The solid lubricating coating 35 contains a matrix that exhibits plastic or viscoplastic rheological behavior, and a solid lubricant that is dispersed in the matrix.

As disclosed, for example, in International Application Publication No. WO2007/42231, the solid lubricating coating 35 may be formed by applying and drying an aqueous emulsion, or may be formed by a spraying method. A preferable method of forming the solid lubricating coating 35 is a method that spray coats a molten composition.

A preferable solid lubricating coating 35 contains 70 to 95% of the matrix in mass%, and 5 to 30% of the solid lubricant in mass%. In this case, the content of the solid lubricant is low relative to the matrix. Consequently, the overall solid lubricating coating 35 also exhibits plastic or viscoplastic rheological behavior that is a property of the matrix.

### [Matrix]

A preferable fusing point of the matrix (having plastic or viscoplastic rheological behavior at room temperature) of the solid lubricating coating 35 is 80°C to 320°C. In this case, the molten composition that is at a temperature that is equal to or greater than the fusing point of the matrix can be spray coated using a well-known spray gun, and the solid lubricating coating 35 can be easily formed on the contact surface 31 of the box 3.

The aforementioned matrix preferably contains a thermoplastic polymer, a metal soap and a wax, and further preferably contains a corrosion inhibitor and a water-insoluble liquid resin.

Polyethylene is a preferable thermoplastic polymer. The fusing point of polyethylene is low. Therefore, spray coating thereof in a hot melt state can be performed even at a temperature that is 150°C or less, and the lubricity of the solid lubricating coating 35 that is formed is also excellent.

In the present specification, the term "metal soap" refers to a salt with a metal other than an alkali metal of a higher fatty acid (fatty acid with 12 carbons or more). The metal soap captures fragments that arise when making up or breaking out the threaded connection 1, to thereby suppress the discharge of the fragments to the external environment. The metal soap also decreases the coefficient of friction of the solid lubricating coating 35 and thereby enhances the lubricity. Furthermore, the metal soap enhances corrosion resistance and delays a time at which corrosion occurs in a salt spray test. Preferable metal soaps are zinc stearate and calcium stearate.

Wax serves a similar function as that of a metal soap. Accordingly, either one of a metal soap and a wax may be contained in the solid lubricating coating 35. However, if the solid lubricating coating 35 contains both of a metal soap and a wax, the lubricity of the solid lubricating coating 35 will be further enhanced. In addition, because wax has a low fusing point, wax also has the advantage of lowering the fusing point of the composition that serves as the raw material of the solid lubricating coating 35, in other words, the spray coating temperature.

The wax is, for example, one or more types of an animal wax, a vegetable wax, a mineral wax, and a synthetic wax. More specifically, examples of the wax include beeswax and whale wax (the aforementioned animal waxes); Japan wax, carnauba wax, candelilla wax, and rice wax (the aforementioned vegetable waxes); paraffin wax, microcrystalline wax, petrolatum, montan wax, ozokerite, and ceresine (the aforementioned mineral waxes); and oxide wax, polyethylene wax, Fischer-Tropsch wax, amide wax, and hardened castor oil (castor wax) (the aforementioned synthetic waxes). Carnauba wax is more preferable.

The mass ratio of the wax with respect to the metal soap is preferably in the range of 0.5 to 3 with respect to one part by mass of the metal soap. A more preferable upper limit of the mass ratio of the wax is 2, and an upper limit of 1 is further preferable.

Preferred corrosion inhibitors are those types which have been conventionally added to lubricating oils as corrosion inhibitors, since such corrosion inhibitors exhibit excellent lubrication performance. Representative examples of such types of corrosion inhibitors include a calcium sulfonate derivative (for example, a product manufactured by the Lubrizol Corporation under the product name Alox™ 606), strontium zinc phosphosilicate (for example, a product manufactured by Halox under the product name Halox™ SZP-391), and a product manufactured by King Industries, Inc. under the product name NA-SUL™ Ca/W1935. If the solid lubricating coating 35 contains a corrosion inhibitor, the rust preventing properties of the contact surface 31 can be enhanced. A preferable lower limit of the content of the corrosion inhibitor in the solid lubricating coating 35 is 5% by mass.

A water-insoluble liquid resin (a resin which is liquid at room temperature) increases the flowability in a molten state of the composition that is the raw material of the solid lubricating coating 35, and thus reduces clogging during spray coating and the like. A preferable water-insoluble liquid resin is one or more types selected from a poly(alkyl methacrylate), polybutene, polyisobutene, and polydialkylsiloxane (a liquid silicone resin such as dimethylpolysiloxane). Liquid polydialkylsiloxane also functions as a surface active agent.

In addition to the above, the matrix may contain one or more types selected from a surface active agent, a colorant, an antioxidant agent and the like. In addition, the matrix may contain a total amount of not more than 2% by mass of an extreme pressure agent and a liquid lubricant and the like.

An example of a preferable composition (in mass percent) of the matrix is as follows:
Thermoplastic polymer: 5 to 40%,
Wax: 5 to 30%,
Metal soap: 5 to 30%,
Corrosion inhibitor: 0 to 50%,
Water-insoluble liquid resin: 0 to 17%,
Surface active agent, colorant, antioxidant agent: 0 to 2% each,
Extreme pressure agent, liquid lubricant: 0 to 2% each.

A more specific example of a preferable composition (in mass percent) of the matrix of the solid lubricating coating 35 is as follows:
Polyethylene homopolymer: 5 to 40%,
Carnauba wax: 5 to 30%,
Zinc stearate: 5 to 30%,
Corrosion inhibitor: 5 to 50%,
Poly(alkyl methacrylate): 0 to 15%,
Dimethylpolysiloxane: 0 to 2%
Colorant: 0 to 1%,
Antioxidant agent: 0 to 1%.

### [Solid Lubricant]

In the present specification, the term "solid lubricant" means a powder that has lubricity. Solid lubricants are broadly classified into the following four types of solid lubricant powders:
(1) solid lubricant powders which exhibit lubricity because of having a specific crystal structure which slides easily, for example, a hexagonal laminar crystal structure (for example, graphite, zinc oxide, and boron nitride),
(2) solid lubricant powders which exhibit lubricity because of having a reactive element in addition to a crystal structure (for example, molybdenum disulfide, tungsten disulfide, graphite fluoride, tin sulfide, and bismuth sulfide),
(3) solid lubricant powders which exhibit lubricity due to chemical reactivity (for example, certain kinds of thiosulfate compounds), and
(4) solid lubricant powders which exhibit lubricity due to plastic or viscoplastic behavior under frictional stresses (for example, polytetrafluoroethylene and polyimides).

The solid lubricant may contain one or more types of the types described above in (1) to (4). Preferable solid lubricants are the solid lubricant powders described in (2). More preferably, the solid lubricant contains a solid lubricant powder described in (2) and a solid lubricant powder described in (1) and/or (4).

The solid lubricant may further contain the above described solid lubricant powders and an inorganic powder for enhancing sliding properties (referred to as "sliding inorganic powder"). Examples of the sliding inorganic powder are titanium dioxide and bismuth oxide. These inorganic powders can be contained in the solid lubricating coating in an amount of not more than 20% by mass.

### [Method for producing solid lubricating coating 35]

As described above, according to the present embodiment, the solid lubricating coating 35 is formed, for example, by hot melt spraying. More specifically, the composition (the composition containing the above described matrix and solid lubricant) that is the raw material for the solid lubricating coating 35 is heated and melted. The molten composition (the matrix is melted, and the solid lubricant remains in a solid state) is sprayed using a spray gun while maintaining the temperature. The heating temperature of the composition is preferably set to a temperature that is 10°C to 50°C higher than the fusing point of the matrix. By performing the above described steps, the applied composition hardens and the solid lubricating coating 35 is formed.

The contact surface 31 onto which the molten composition of the solid lubricating coating 35 is to be applied is also preferably preheated to a temperature higher than the fusing point of the matrix. In such a case, the coatability is improved. In a case where the composition of the solid lubricating coating 35 contains a small amount (for example, not more than 2% by mass) of a surface active agent that is typified by dimethylpolysiloxane, a favorable solid lubricating coating 35 is formed even if the temperature of the contact surface 31 is lower than the fusing point of the matrix.

If the thickness of the solid lubricating coating 35 is too thin, the lubricity of the threaded connection 1 will decline and the galling resistance will also decrease. In addition, the rust preventing properties of the threaded connection 1 will decline. On the other hand, if the thickness of the solid lubricating coating 35 is too thick, the solid lubricating coating 35 will easily scrape off. Accordingly, a preferable thickness of the solid lubricating coating 35 is 10 to 150 µm. A preferable lower limit of the thickness of the solid lubricating coating 35 is 25 µm. A preferable upper limit of the thickness of the solid lubricating coating 35 is 80 µm.

### [Pre surface treatment]

It is preferable to perform a pre surface treatment with respect to the contact surfaces 21 and 31 of the pin 2 and the box 3 prior to forming the above described photocured (ultraviolet cured) coating 25 and solid lubricating coating 35.

The thread portions 22 and 32 and the unthreaded metal contact portions 23 and 33 of the contact surfaces 21 and 31 are formed by cutting operations including thread cutting. The surface roughness of the contact surfaces 21 and 31 is around 3 to 5 µm. If the roughness of the contact surfaces 21 and 31 is made greater than this amount, the adhesiveness of a coating (photocured (ultraviolet cured) coating 25 or solid lubricating coating 35) that is formed on the contact surfaces 21 and 31 can be further increased. In such case, the lubricity, galling resistance, and rust preventing properties are also enhanced. Accordingly, pre surface treatment is preferably performed with respect to one or both of the contact surfaces 21 and 31 of the pin 2 and the box 3.

Examples of the pre surface treatment are blasting treatment, pickling treatment, chemical treatment and metal plating treatment.

In the blasting treatment, a blasting material that is typified by spherical shot material or angular grit material is blasted at the contact surfaces 21 and 31 to increase the roughness of the contact surfaces 21 and 31. In the pickling treatment, the contact surfaces 21 and 31 are immersed in a strongly acidic solution such as sulfuric acid, hydrochloric acid, nitric acid, or hydrofluoric acid to increase the roughness of the contact surfaces 21 and 31.

Examples of the chemical treatment are phosphate chemical conversion treatment, oxalate chemical treatment and borate chemical treatment. A chemical coating (undercoating 26 and undercoating 36) made of acicular crystals that has a large surface roughness is formed by these chemical treatments.

Examples of the metal plating treatment include an electroplating method, an impact plating method and a composite metal plating method. In the electroplating method, a plated coating such as a plating of copper, iron, or alloys thereof is formed as the undercoatings 26 and 36. In the impact plating method, particles having an iron core coated with zinc or a zinc-iron alloy or the like are blasted using centrifugal force or air pressure. By this means, a porous metal coating (undercoatings 26 and 36) formed by deposition of zinc or zinc-iron alloy particles is formed on the contact surface. In the composite metal plating method, a metal coating (undercoatings 26 and 36) in which solid particulates are dispersed in a metal is formed.

Whichever of the above described pre surface treatments is adopted, a surface roughness Rmax of the contact surfaces 21 and 31 after the pre surface treatment is preferably 5 to 40 µm. If the surface roughness Rmax is 5 µm or more, the adhesiveness of the photocured coating 25 and the solid lubricating coating 35 increases. Further, if the surface roughness Rmax is 40 µm or less, an increase in friction when making up the threaded connection 1 can be suppressed, and the photocured (ultraviolet cured) coating 25 and solid lubricating coating 35 will be difficult to damage. Two or more kinds of the above described pre surface treatments may be performed. A different type of pre surface treatment may be performed with respect to the pin 2 and the box 3, respectively, or a pre surface treatment may be performed with respect to either one of the pin 2 and the box 3.

Among the above described pre surface treatments, phosphate treatment using manganese phosphate, zinc phosphate, iron manganese phosphate, or zinc calcium phosphate, or impact plating to form a zinc or zinc-iron alloy undercoating is preferable as a pre surface treatment. More specifically, from the viewpoint of the adhesiveness of the photocured(ultraviolet cured) coating 25 and the solid lubricating coating 35 a manganese phosphate coating is preferable, and from the viewpoint of corrosion resistance, a zinc or zinc-iron alloy coating with which a sacrificial corrosion effect produced by zinc can be expected is preferable.

The undercoatings 26 and 36 that are formed by phosphate treatment and the zinc or zinc-iron alloy undercoatings 26 and 36 that are formed by impact plating are each porous coatings. When the photocured (ultraviolet cured) coating 25 and the solid lubricating coating 35 are formed on the undercoatings 26 and 36, the adhesiveness of the upper coatings is increased by a so-called "anchor effect" of the porous coatings. As a result, it becomes more difficult for peeling of the photocured (ultraviolet cured) coating 25 and the solid lubricating coating 35 to occur even when making up and breaking out are repeated. Consequently, direct metal-to-metal contact is effectively prevented, and the lubricity, galling resistance, rust preventing properties and corrosion resistance are enhanced.

Phosphate treatment can be carried out by immersion or spraying. An acidic phosphating solution which is commonly used for zinc-plated steel materials can be used as the chemical conversion treatment solution. For example, a zinc phosphate chemical conversion treatment can be carried out using a treatment solution containing 1 to 150 g/L of phosphate ions, 3 to 70 g/L of zinc ions, 1 to 100 g/L of nitrate ions, and 0 to 30 g/L of nickel ions. A manganese phosphating solution that is normally used for threaded connections may also be used. The temperature of the solution can be from normal temperature to 100°C, and the duration of treatment can be up to 15 minutes in accordance with the desired coating thickness. In order to accelerate coating formation, an aqueous surface conditioning solution containing colloidal titanium can also be supplied to the surface to be treated prior to the phosphate treatment. After the phosphate treatment, it is preferable to wash the contact surfaces 21 and 31 with cold or warm water followed by drying.

Mechanical plating in which particles are impacted against a material to be plated inside a rotating barrel, or blast plating in which particles are impacted against the material to be plated using a blasting apparatus can be employed for the impact plating treatment. In the present embodiment, since it is sufficient to plate only the contact surfaces 21 and 31, it is preferable to employ blast plating which can perform localized plating.

For example, blast media in the form of particles having an iron core whose surface is coated with zinc or a zinc alloy (for example, a zinc-iron alloy) is blasted against the contact surfaces 21 and 31. The content of zinc or a zinc alloy in the particles is preferably in the range of 20 to 60% by mass, and the particle diameter is preferably in the range of 0.2 to 1.5 mm. Blasting of the particles causes only the zinc or zinc alloy which is the coating layer of the particles to adhere to the contact surfaces 21 and 31, and a porous coating (undercoatings 26 and 36) made of zinc or a zinc alloy is thereby formed on the respective contact surfaces 21 and 31. This blast plating can form a plated coating having good adhesiveness with respect to a steel surface regardless of the material quality of the steel.

From the viewpoint of corrosion resistance and adhesiveness, the thickness of a zinc or zinc alloy layer formed by the above described impact plating treatment is preferably 5 to 40 µm. If the thickness is 5 µm or more, sufficient corrosion resistance can be secured. If the thickness is 40 µm or less, the adhesiveness with respect to the photocured (ultraviolet cured) coating 25 or the solid lubricating coating 35 can be maintained. Similarly, the thickness of a phosphate coating (undercoatings 26 and 36) is also preferably in the range of 5 to 40 µm.

A specific kind of single-layer or multiple-layer electroplating is effective for increasing galling resistance when used to form a substrate for the solid lubricating coating 35 in particular, although this kind of pre surface treatment does not provide a surface roughening effect. Examples of such kind of electroplating include single-layer plating with Cu, Sn, or Ni metal, single-layer plating with a Cu-Sn alloy as disclosed in Japanese Patent Application Publication No. 2003-74763, two-layer plating with a Cu layer and an Sn layer, and three-layer plating with an Ni layer, a Cu layer, and an Sn layer.

Cu-Sn alloy plating, two-layer plating by Cu plating and Sn plating, and three-layer plating by Ni plating, Cu plating, and Sn plating are preferable for a pipe made from a steel having a Cr content of 5% or more. More preferable are two-layer plating by Cu plating and Sn plating, three-layer plating by Ni strike plating, Cu plating, and Sn plating, and Cu-Sn-Zn alloy plating. Such metal plating (including metal alloy plating) can be carried out, for example, in accordance with a method described in Japanese Patent Application Publication No. 2003-74763. In the case of multiple layer plating, the lowermost plated coating (usually Ni plating) is referred to as "strike plating". A preferable thickness of the strike plating is less than 1 µm. A preferable thickness (the total coating thickness in the case of multiple layer plating) of the plated coating is in the range of 5 to 15 µm.

### EXAMPLES

The present invention is exemplified hereunder by way of examples. However, the present invention is not limited by the following examples. In the examples, the contact surface of a pin will be referred to as the "pin surface" and the contact surface of a box will be referred to as the "box surface". Unless otherwise specified, "percent" as used in the examples means "mass percent".

A plurality of threaded connections for oil country tubular goods (product name "VAM 21") manufactured by Nippon Steel & Sumitomo Metal Corporation were prepared. The outer diameter of each of the oil country tubular goods products was 244.48 mm (9-5/8 inches), and the wall thickness was 1.199 cm (0.472 inches). The oil country tubular goods were made of carbon steel, and the chemical composition thereof contained C: 0.21%, Si: 0.25%, Mn: 1.1%, P: 0.02%, S: 0.01%, Cu: 0.04%, Ni: 0.06%, Cr: 0.17%, and Mo: 0.04%, with the balance being iron and impurities.

### [Process for forming coating on pin surface]

The following pre surface treatment was performed with respect to the pin surface. The pin surface was finished by machine grinding to provide the pin surface with a surface roughness of 3 µm. Thereafter, the pin surface was immersed for 10 minutes in a zinc phosphating solution at 75°C to 85°C to form a zinc phosphate coating with a thickness of 10 µm (surface roughness of 8 µm).

After completing the pre surface treatment of the pin surface, a photocured (ultraviolet cured) coating was formed. A common acrylic resin coating composition was prepared as the photocurable (ultraviolet curable) resin composition. Compositions for a photocurable (ultraviolet curable) coating were prepared that contained PFPE having the weight-average molecular weights shown in Table 1 in the mass percentages shown in Table 1 with respect to 100 parts by mass of the photocurable (ultraviolet curable) resin composition, and further containing a photopolymerization initiator. For Comparative Example 1, the above described acrylic resin coating composition that did not contain PFPE was coated onto the pin surface.

### [Table 1]

**TABLE 1**

| Number | Photocurable (ultraviolet curable) coating | | Number of times making up and breaking out possible | Salt spray test result (hr) | Shouldering torque ratio (%) |
|---|---|---|---|---|---|
| | Mass (%) of PFPE | Weight-average molecular weight of PFPE | | | |
| Inventive Example 1 | 0.1 | 8400 | >10 | Rusting at 1000 hr | 149 |
| Inventive Example 2 | 0.2 | 8400 | >10 | Rusting at 1500 hr | 117 |
| Inventive Example 3 | 0.5 | 8400 | >10 | >2000 | 108 |
| Comparative Example 2 | 5 | 2700 | >10 | >2000 | 120 |
| Inventive Example 5 | 5 | 4500 | >10 | >2000 | 110 |
| Inventive Example 6 | 5 | 8400 | >10 | >2000 | 102 |
| Inventive Example 7 | 10 | 8400 | >10 | >2000 | 94 |
| Inventive Example 8 | 20 | 8400 | >10 | >2000 | 88 |
| Comparative Example 1 | 0 | - | Galling occurred at 5th time | Rusting at 500 hr | 212 |

A product manufactured by Daikin Industries, Ltd. under the product name "DEMNUM S-200" was used for the PFPE for test numbers 1 to 3 and 6 to 8. A product manufactured by Daikin Industries, Ltd. under the product name "DEMNUM S-20" was used for the PFPE for comparative example 2. A product manufactured by Daikin Industries, Ltd. under the product name "DEMNUM S-65" was used for the PFPE for test number 5.

The aforementioned compositions for a photocurable (ultraviolet curable) coating in liquid form were respectively applied onto the pin surface. Thereafter, irradiation with ultraviolet rays was performed under the following conditions to harden the composition for a photocurable (ultraviolet curable) coating and form a photocured (ultraviolet cured) coating.
UV lamp: Air-cooled mercury vapor lamp,
UV lamp output: 4 kW,
Wavelength of ultraviolet rays: 260 nm.

The thickness of the photocured (ultraviolet cured) coating for each of the test numbers was 20 µm.

### [Process for forming coating on box surface]

The following pre surface treatment was performed with respect to the box surface. The box surface was finished by machine grinding to provide the box surface with a surface roughness of 3 µm. Thereafter, Ni strike plating was formed thereon by electroplating. Cu-Sn-Zn alloy plating was performed, to form a plated coating with a total thickness of 8 µm including the strike plating.

A solid lubricating coating having plastic or viscoplastic rheological behavior consisting of a composition containing a thermoplastic polymer, a wax, a metal soap, a corrosion inhibitor, a water-insoluble liquid resin and a solid lubricant that is described in International Application Publication No. WO2009/72486 was formed on the plated coating. More specifically, a composition for a solid lubricating coating containing the following ingredients was prepared.
- Polyethylene homopolymer (product name Licowax PE 520, manufactured by Clariant): 9%,
- Carnauba wax: 15%,
- Zinc stearate: 15%,
- Liquid poly(alkyl methacrylate) (product name VISCOPLEX 6-950, manufactured by RohMax): 5%
- Corrosion inhibitor (product name Alox 606, manufactured by Lubrizol Corporation): 40%,
- Graphite fluoride: 3.5%,
- Zinc oxide: 1%,
- Titanium dioxide: 5%,
- Bismuth trioxide: 5%,
- Silicone (dimethylpolysiloxane): 1%,
- Antioxidant agent (product name Irganox L150, manufactured by Ciba-Geigy): 0.3%, and
- Antioxidant agent (product name Irgafos 168, manufactured by Ciba-Geigy): 0.2%.

The above described composition was heated to 120°C in a tank equipped with a stirring mechanism to make the composition into a molten state having a viscosity suitable for coating. Further, the box surface was preheated to 130°C by induction heating. The composition in a molten state was applied using a spray gun having a spray head with a temperature maintaining function, and thereafter cooled. A solid lubricating coating having a thickness of 30 µm was formed by the above described process.

### [Repeated making up and breaking out test in extremely low temperature environment]

The above described threaded connection for oil country tubular goods of Inventive Examples 1 to 3 and 5 to 8 of the present invention and Comparative Examples 1 and 2 were each subjected to a test in which making up and breaking out were repeated up to 10 times at a low temperature of -40°C. More specifically, each time that making up and breaking out were to be performed, the periphery of the pin and box was cooled to -40°C using dry ice to create an extremely low temperature environment. Thereafter, making up and breaking out was performed. The fastening speed was 10 rpm, and the fastening torque was 42.8 kN-m.

In addition, a similar making up and breaking out test to that described above was also performed in a room temperature environment of 20°C. A shouldering torque ratio at the time of the initial making up in the extremely low temperature environment of -40°C was determined by taking the shouldering torque during the initial making up in the room temperature environment as 100.

In addition, each time the making up and breaking out test was performed once, the pin surface and box surface were visually observed to check for the occurrence of galling. If the occurrence of galling was found, the making up and breaking out test was ended.

### [Salt spray test]

A salt spray test was performed in conformity with JIS Z2371 (2000) for the pin surfaces of each test number on which the photocured (ultraviolet cured) coating was formed, and the testing time until rust was confirmed was measured.

### [Test results]

The test results are shown in Table 1. As shown in Table 1, in each of Inventive Examples 1 to 3 and 5 to 8 and Comparative Example 2 of the present invention, galling was not observed even after performing making up and breaking out 10 times, and thus Inventive Examples 1 to 3 and 5 to 8 and Comparative Example 2 of the present invention exhibited excellent galling resistance. In addition, in each of Inventive Examples 1 to 3 and 5 to 8 and Comparative Example 2 of the present invention the shouldering torque ratio was less than 150%, thus exhibiting excellent lubricity. Furthermore, for each of the test numbers, the occurrence of rust was not observed below 1,000 hours in the salt spray test, and thus Inventive Examples 1 to 8 of the present invention exhibited excellent rust preventing properties.

Further, the PFPE content was in the range of 0.2 to 20% in Inventive Examples 2, 3 and 5 to 8 and Comparative Example 2 of the present invention. Therefore, Inventive Examples 2, 3 and 5 to 8 and Comparative Example 2 of the present invention exhibited more excellent lubricity, with the shouldering torque ratio being not more than 120%. Further, occurrence of rust was not observed below 1,500 hours in the salt spray test.

In addition, when Comparative Example 2 and Inventive Examples 5 and 6 of the present invention in which the PFPE contents were the same were compared, it was found that the weight-average molecular weight of PFPE in Inventive Examples 5 and 6 of the present invention was 3,000 or more. Consequently, in comparison to Comparative Example 2, in Inventive Examples 5 and 6 of the present invention the shouldering torque ratio was low and more excellent lubricity was exhibited. In addition, the weight-average molecular weight of Inventive Example 6 of the present invention was higher than that of Inventive Example 5 of the present invention. Consequently, the shouldering torque ratio for Inventive Example 6 of the present invention was also lower than that for Inventive Example 5 of the present invention.

In contrast, Comparative Example 1 did not contain PFPE in the photocured (ultraviolet cured) coating. Consequently, the shouldering torque ratio was more than 200%, and galling was confirmed after performing making up and breaking out five times. In addition, rusting was confirmed at 500 hours in the salt spray test.

### [Examples using connections for oil country tubular goods of other sizes]

In the above described Examples, a connection for oil country tubular goods having an outer diameter of 244.48 mm (9-5/8 inches) (product name: VAM 21) was used. In order to conduct a performance evaluation with respect to connections for oil country tubular goods of other sizes, tests were performed in the same manner as in the above described Examples with respect to other outer diameters (outer diameters from 60.32 mm to 355.6 mm (2-3/8 inches to 14 inches)), steel grades other than carbon steel (13Cr steel and high alloy steel that is typified by 25Cr steel), and various thread types (integral type connections such as those available under the product names "VAM Connection" series, "VAM TOP" series, and "VAM SLIJ" that are manufactured by Nippon Steel & Sumitomo Metal Corporation). Similar results to those of the above described Examples were obtained.

An embodiment of the present invention has been described above. However, the above described embodiment is merely an example for implementing the present invention. Accordingly, the present invention is not limited to the above described embodiment, and the above described embodiment can be appropriately modified within a range which does not deviate from the technical scope of the appended claims.

### REFERENCE SIGNS LIST

- 1: Threaded connection for oil country tubular goods
- 2: Pin
- 3: Box
- 21, 31: Contact surface
- 22, 32: Thread portion
- 23, 33: Unthread metal contact portion
- 25: Photocured (ultraviolet cured) coating
- 35: Solid lubricating coating

## Claims

1. A threaded connection (1) for oil country tubular goods comprising a pin (2) and a box (3) that each include a contact surface (21, 31) having a thread portion (22, 32) and an unthreaded metal contact portion (23, 33), wherein
the contact surface (21) of the pin (2) comprises, as an uppermost layer, a photocured coating (25) containing a photocurable resin , and
the contact surface (31) of the box (3) comprises a solid lubricating coating (35) as an uppermost layer,
**characterized in that** the photocured coating further contains perfluoropolyether of 3,000 or more of a weight-average molecular weight.

2. The threaded connection (1) for oil country tubular goods according to claim 1, **characterized in that**
the photocured coating (25) contains 0.2 to 20% by mass of perfluoropolyether.

3. The threaded connection (1) for oil country tubular goods according to claim 1 or claim 2, **characterized in that**
a thickness of the solid lubricating coating (35) is 10 to 150 µm, and a thickness of the photocured coating (25) is 5 to 40 µm.

4. The threaded connection (1) for oil country tubular goods according to any one of claims 1 to 3, **characterized in that**
at least one of the contact surface (21) of the pin (2) and the contact surface (31) of the box (3) is subjected to a pre surface treatment by one or more types of methods selected from a group consisting of blasting treatment, pickling, chemical treatment and metal plating.

## Patentansprüche

1. Gewindeverbindung (1) für Ölfeldrohre, umfassend einen Stift (2) und ein Gehäuse (3), die jeweils eine Kontaktfläche (21, 31) mit einem Gewindeabschnitt (22, 32) und einem gewindelosen Metallkontaktabschnitt (23, 33) aufweisen, wobei
die Kontaktfläche (21) des Stifts (2) als oberste Schicht eine photogehärtete Beschichtung (25) umfasst, die ein photohärtbares Harz enthält, und
die Kontaktfläche (31) des Gehäuses (3) als oberste Schicht eine feste Schmierschicht (35) aufweist,
**dadurch gekennzeichnet, dass** die photogehärtete Beschichtung ferner Perfluorpolyether mit einem gewichtsmittleren Molekulargewicht von 3.000 oder mehr enthält.

2. Gewindeverbindung (1) für Ölfeldrohre nach Anspruch 1, **dadurch gekennzeichnet, dass** die photogehärtete Beschichtung (25) 0,2 bis 20 Masse-% Perfluorpolyether enthält.

3. Gewindeverbindung (1) für Ölfeldrohre nach Anspruch 1 oder Anspruch 2, **dadurch gekennzeichnet, dass**
eine Stärke der festen Schmierschicht (35) 10 bis 150 µm beträgt und eine Stärke der photogehärteten Beschichtung (25) 5 bis 40 µm beträgt.

4. Gewindeverbindung (1) für Ölfeldrohre nach einem der Ansprüche 1 bis 3, **dadurch gekennzeichnet, dass**
mindestens eine der Kontaktfläche (21) des Stifts (2) und der Kontaktfläche (31) des Gehäuses (3) einer Oberflächenvorbehandlung durch eine oder mehrere Arten von Verfahren unterzogen wird, die aus einer Gruppe ausgewählt sind, die aus Strahlbehandlung, Beizen, chemischer Behandlung und Metallplattierung besteht.

## Revendications

1. Raccord fileté (1) pour articles tubulaires pour puits de pétrole, comprenant une extrémité mâle (2) et une extrémité femelle (3) qui incluent chacune une surface de contact (21, 31) ayant une partie à filet (22, 32) et une partie de contact métallique non filetée (23, 33), dans lequel
la surface de contact (21) de l'extrémité mâle (2) comprend, en tant que couche la plus haute, un revêtement photodurci (25) contenant une résine photodurcissable, et
la surface de contact (31) de l'extrémité femelle (3) comprend un revêtement lubrifiant solide (35) en tant que couche la plus haute,
**caractérisé en ce que** le revêtement photodurci contient en outre du perfluoropolyéther de 3 000 ou plus d'un poids moléculaire moyen en poids.

2. Raccord fileté (1) pour articles tubulaires pour puits de pétrole selon la revendication 1, **caractérisé en ce que**
le revêtement photodurci (25) contient de 0,2 à 20 % en masse de perfluoropolyéther.

3. Raccord fileté (1) pour articles tubulaires pour puits de pétrole selon la revendication 1 ou la revendication 2, **caractérisé en ce que**
une épaisseur du revêtement lubrifiant solide (35) est de 10 à 150 µm, et une épaisseur du revêtement photodurci (25) est de 5 à 40 µm.

4. Raccord fileté (1) pour articles tubulaires pour puits de pétrole selon l'une quelconque des revendications 1 à 3, **caractérisé en ce que**
au moins une de la surface de contact (21) de l'extrémité mâle (2) et de la surface de contact (31) de l'extrémité femelle (3) est soumise à un pré-traitement de surface par un ou plusieurs types de procédés sélectionnés parmi un groupe constitué de traitement de décapage à l'abrasif, de décapage chimique, de traitement chimique et d'application de revêtement métallique.
